# EUROPÄISCHE PATENTSCHRIFT

(11) **EP 3 165 429 B1**
(45) Veröffentlichungstag und Bekanntmachung des Hinweises auf die Patenterteilung: **11.09.2019**
(21) Anmeldenummer: 16002246.3
(22) Anmeldetag: 19.10.2016
(51) Int. Cl.: B62D 27/02, B62D 29/04, B62D 21/02, B62D 29/00

(54) **RAHMENSTRUKTUR MIT WENIGSTENS EINER KONSOLE ZUR ANBINDUNG WEITERER BAUTEILE, VERFAHREN ZUR HERSTELLUNG UND KRAFTFAHRZEUGKAROSSERIE**
FRAME STRUCTURE WITH AT LEAST ONE CONSOLE FOR CONNECTING FURTHER COMPONENTS, METHOD FOR PREPARATION AND MOTOR VEHICLE BODY
STRUCTURE DE CADRE COMPRENANT AU MOINS UNE CONSOLE DESTINÉE À RELIER D'AUTRES COMPOSANTS, PROCÉDÉ DE FABRICATION ET CARROSSERIE DE VÉHICULE

(30) Priorität: 06.11.2015 DE 102015014365
(43) Veröffentlichungstag der Anmeldung: 10.05.2017
(73) Patentinhaber: AUDI AG, 85045 Ingolstadt (DE)
(72) Erfinder: Schauerte, Oliver, 74206 Bad Wimpfen (DE); Eidmann, Florian, DE - 74613 Öhringen (DE); Durst, Karl, DE - 91790 Bergen (DE)
(74) Vertreter: Eickmeyer, Dietmar

(56) Entgegenhaltungen:
- WO-A1-02/02292
- WO-A1-2012/062391
- DE-A1-102005 061 474
- DE-A1-102011 107 212
- DE-A1-102012 112 313
- DE-A1-102013 220 209
- DE-C1- 4 423 642

## Beschreibung

Die Erfindung betrifft eine Rahmenstruktur für eine Kraftfahrzeugkarosserie, mit zumindest zwei Profilbauteilen und einem Verbindungsknoten, der die Profilbauteile miteinander verbindet.

Die Erfindung betrifft ferner eine Kraftfahrzeugkarosserie und ein Verfahren zur Herstellung einer Konsole an einem Profilbauteil.

Aus dem Stand der Technik sind Karosserieaufbauten für Kraftfahrzeuge, insbesondere Personenkraftwagen, bekannt, die aus einzelnen vorgefertigten Profilbauteilen gebildet sind, wobei die Profilbauteile an sogenannten Knotenstellen mittels Verbindungsknoten (Knotenelementen) gefügt bzw. miteinander verbunden sind. Zum Stand der Technik wird bspw. auf die Patentschriften DE 102 56 608 A1, DE 10 2014 209 991 A1 und DE 10 2007 027 593 A1 hingewiesen. Ferner werden für derartige Karosserieaufbauten mit einem aus Profilbauteilen gebildeten Rahmen oder Rahmenabschnitt auch aus Faserkunststoffverbund gebildete Profilbauteile verwendet, wodurch sich mitunter erhebliche Gewichtseinsparungen erzielen lassen. Zum diesbezüglichen Stand der Technik wird bspw. auf die Patentschriften DE 44 23 642 C1, DE 10 2013 226 607 A1 und DE 10 2013 220 209 A1 hingewiesen. Die Merkmale des Oberbegriffs von Anspruch 1 werden durch die WO 02/02292 A1 gezeigt.

Aufgabe der Erfindung ist es, Möglichkeiten aufzeigen, wie bei einer Rahmenstruktur betreffender Art die Verbindung zu weiteren Bauteilen verbessert werden kann.

Die Aufgabe wird gelöst mit einer erfindungsgemäßen Rahmenstruktur entsprechend den Merkmalen des Patentanspruchs 1. Mit einem nebengeordneten Patentanspruch erstreckt sich die Erfindung auch auf ein erfindungsgemäßes Verfahren zur Herstellung bzw. Erzeugung einer Konsole bzw. zur Ausstattung einer Rahmenstruktur oder zumindest eines Profilbauteils mit wenigstens einer Konsole. Mit einem weiteren nebengeordneten Patentanspruch erstreckt sich die Erfindung ferner auf eine Kraftfahrzeugkarosserie, die eine erfindungsgemäße Rahmenstruktur und/oder wenigstens eine unter Anwendung des erfindungsgemäßen Verfahrens hergestellte Konsole aufweist. Bevorzugte Weiterbildungen und Ausgestaltungen der Erfindung ergeben sich analog für alle Erfindungsgegenstände aus den abhängigen Patentansprüchen, der nachfolgenden Beschreibung und den Figuren.

Die erfindungsgemäße Rahmenstruktur zeichnet sich dadurch aus, dass wenigstens eines der Profilbauteile wenigstens eine aus faserverstärktem Kunststoff gebildete Konsole aufweist. D. h., das betreffende Profilbauteil ist mit wenigstens einer integrierten Konsole ausgebildet.

Unter einer Konsole wird ein formschlüssig und/oder stoffschlüssig am betreffenden Profilbauteil befestigtes, vorsprungartig ausgebildetes Tragelement verstanden, an dem andere Bauteile (Anbauteile) befestigt oder abgestützt werden können und/oder mit dem die Rahmenstruktur selbst in der Kraftfahrzeugkarosserie befestigt oder abgestützt werden kann. Die Konsole ist hierfür bevorzugt mit wenigstens einem angeformten Verbindungsabschnitt, insbesondere in Gestalt einer Verbindungsfläche bzw. Anschraubfläche, ausgebildet. Ferner kann die Konsole wenigstens ein Lasteinleitungselement, bspw. ein metallisches Insert, aufweisen, das im faserverstärkten Kunststoffmaterial verankert ist und als Krafteinleitungspunkt und insbesondere als Anschraubpunkt dienen kann.

Unter einem Profilbauteil wird insbesondere ein langgestrecktes, stangenartiges Bauteil mit einer definierten Querschnittsform (Profil) verstanden, das einen geraden oder auch gekrümmten bzw. gebogenen axialen Verlauf aufweisen kann. Die Querschnittsform bzw. das Profil kann sich über dem axialen Verlauf verändern. Bevorzugt handelt es sich bei dem betreffenden Profilbauteil um ein Hohlprofilbauteil. Unter einem Hohlprofilbauteil wird ein rohrartiges Profilbauteil mit geschlossenem Querschnitt (Hohlprofil) und mit wenigstens einer Profilkammer verstanden. Bevorzugt sind alle Profilbauteile der erfindungsgemäßen Rahmenstruktur Hohlprofilbauteile.

Bevorzugt ist zumindest das betreffende Profilbauteil bzw. Hohlprofilbauteil aus einem Faserkunststoffverbund (FKV) bzw. einem Faserkunststoffverbundmaterial gebildet. Unter einem Faserkunststoffverbundmaterial wird ein konsolidierter und ausgehärteter Faserkunststoffverbundwerkstoff aus einer Kunststoffmatrix und Verstärkungsfasern verstanden. Bei dem Kunststoffmaterial (Matrix) kann es sich um einen duroplastischen oder auch thermoplastischen Kunststoff handeln. Bei den Verstärkungsfasern kann es sich bspw. um Kohlenstoff-, Glas-, Kunst- oder Mischfasern handeln. Bevorzugt handelt es sich um sogenannte Endlosfasern. Die Profile können bspw. durch Pultrusion bzw. im Strangziehverfahren hergestellt sein. Ebenso können die Profile auch geflochten oder gewickelt sein.

Die Konsole ist aus einem faserverstärkten Kunststoff gebildet. Das faserverstärkte Kunststoffmaterial kann bspw. an das betreffende Profilbauteil angespritzt oder angepresst sein, wie nachfolgend noch näher erläutert. Bei dem Kunststoffmaterial (Matrix) kann es sich um einen duroplastischen oder auch thermoplastischen Kunststoff handeln. Bei den Verstärkungsfasern kann es sich bspw. um Kohlenstoff-, Glas-, Kunst- oder Mischfasern handeln. Bevorzugt handelt es sich um Kurzfasern, die eine Länge von 1 mm bis 100 mm, bevorzugt von 2 mm bis 50 mm und insbesondere von 3 mm bis 25 mm aufweisen können. Besonders bevorzugt handelt es sich um Recyclingfasern.

Die Konsole ist an der betreffenden Stelle das Profilbauteil vollständig umgreifend ausgebildet, d. h. die Konsole ist (in Umfangsrichtung) manschettenartig oder rohrschellenartig um das Profilbauteil herum ausgebildet.

Die Konsole kann an einem freien, d. h. nicht in einem Verbindungsknoten verbundenen Ende des Profilbauteils angeordnet sein. Bevorzugt bildet die Konsole dabei zugleich auch ein Profilendstück.

Das erfindungsgemäße Verfahren zur Herstellung bzw. Erzeugung einer Konsole an einem Profilbauteil für eine erfindungsgemäße Rahmenstruktur umfasst die Schritte:
- Positionieren des Profilbauteils in einem die Konsole erzeugenden Presswerkzeug, wobei dieses Profilbauteil noch unverbunden oder bereits über wenigstens einen Verbindungsknoten mit wenigstens einem anderen Profilbauteil verbunden sein kann;
- Ausführen eines Pressvorgangs unter Zugabe von faserhaltiger und insbesondere kurzfaserhaltiger Kunststoffmasse zur Erzeugung der Konsole;
- Öffnen des Presswerkzeugs (nach dem Aushärten der Kunststoffmasse) und Entnahme des Profilbauteils mit der daran angeformten Konsole.

Bei dem Presswerkzeug handelt es sich insbesondere um ein mehrteiliges Presswerkzeug mit einer formgebenden Werkzeugkavität. Die faserhaltige Kunststoffmasse wird vor dem Schließen des Presswerkzeugs oder gegebenenfalls auch erst nach dem Schließen des Presswerkzeugs (Spritzpressen) in die Werkzeugkavität eingebracht. Bei der faserhaltigen Kunststoffmasse kann es sich z. B. um SMC-Masse (Sheet Molding Compound) oder BMC-Masse (Bulk Molding Compound) handeln.

Bevorzugt handelt es sich bei dem Profilbauteil um ein Hohlprofilbauteil und die Konsole soll an einem freien Ende bzw. Profilende des Profilbauteils angeformt werden, wobei das offene Profilende zunächst durch ein Verschlusselement verschlossen wird,welches dann während des Pressvorgangs ein Eindringen der faserhaltigen Kunststoffmasse in das Hohlprofilbauteil verhindert.

Das Verschlusselement ist insbesondere aus einem Kunststoffschaummaterial bzw. Kunstschaumstoff gebildet und verschließt stopfen- bzw. pfropfartig das offene Profilende. Bei dem Kunststoffschaummaterial handelt es sich insbesondere um einen hitzebeständigen und druckfesten, vorzugsweise geschlossenzelligen, Hartschaum bzw. Hartschaumstoff, bspw. auf PMI-Basis (Polymethacrylimid) oder auf PU-Basis (Polyurethan). Das aus Kunststoffschaummaterial gebildete Verschlusselement kann bspw. aus einem vorgefertigten Schaummaterial (insbesondere ein Schaumhalbzeug, wie bspw. eine Hartschaumplatte oder dergleichen) hergestellt und in das offene Profilende eingeklebt werden. Eine andere Möglichkeit besteht darin, das offene Profilende auszuschäumen und dadurch stopfen- bzw. pfropfartig zu verschließen. Die Verschlusstiefe des pfropf- bzw. stopfenartigen Verschlusselements (damit ist die Einsteck-, Einkleb- oder Einschäumtiefe gemeint) kann 10 mm bis 100 mm, bevorzugt 20 mm bis 80 mm, besonders bevorzugt 40 mm bis 60 mm und insbesondere ca. 50 mm betragen.

Die Erfindung wird nachfolgend beispielhaft und in nicht einschränkender Weise anhand der schematischen Figuren näher erläutert. Die in den Figuren gezeigten und/oder nachfolgend erläuterten Merkmale können, auch losgelöst von konkreten Merkmalskombinationen, allgemeine Merkmale der Erfindung sein und die Erfindung weiterbilden.
- Fig. 1: zeigt in einer perspektivischen Ansicht eine aus Hohlprofilbauteilen gebildete Rahmenstruktur einer Kraftfahrzeugkarosserie.
- Fig. 2: zeigt einen Schnitt durch ein Profilendstück an der Rahmenstruktur aus Fig. 1.
- Fig. 3: veranschaulicht in mehreren Schnittdarstellungen die Herstellung einer Konsole an der Rahmenstruktur aus Fig. 1.

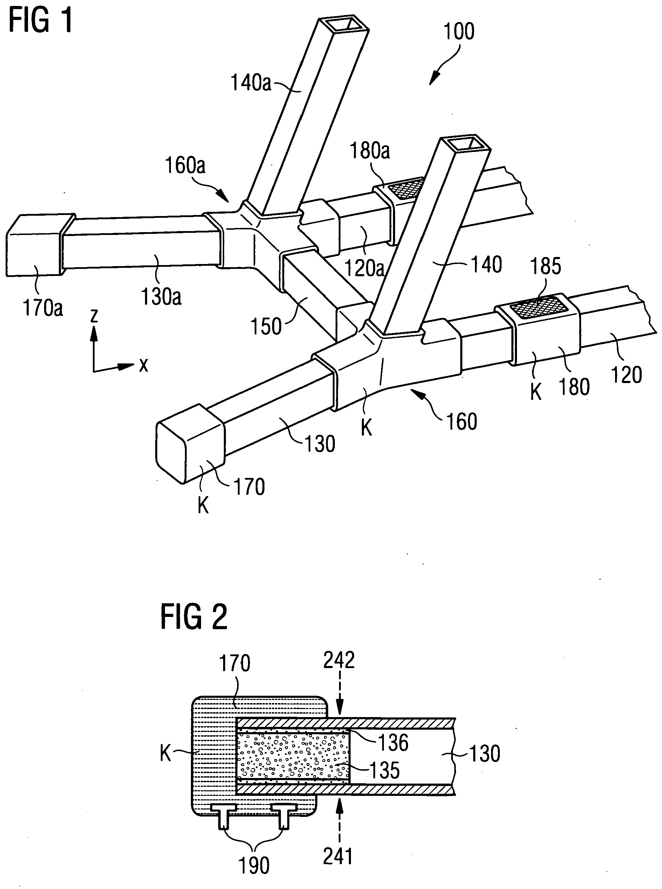

Fig. 1 zeigt eine hintere Rahmenstruktur bzw. Hinterwagenstruktur 100, die Teil einer größeren Rahmenstruktur (Space-Frame-Rahmen) einer PKW-Kraftfahrzeugkarosserie ist. Die Rahmenstruktur 100 umfasst mehrere aus Faserkunststoffverbundmaterial gebildete und getrennt voneinander vorgefertigte Hohlprofilbauteile 120, 120a, 130, 130a, 140, 140a und 150, die über Verbindungsknoten 160 und 160a fest miteinander verbunden sind. Ein Verbindungsknoten 160 bzw. 160a ist somit ein Verbindungselement, das mehrere Profilbauteile an ihren knotenseitigen Profilenden miteinander verbindet. Die Verbindungsknoten 160 und 160a sind aus faserverstärktem Kunststoff K gebildet. Die als Längsträger fungierenden Rahmenprofilteile 130 und 130a sind ferner an ihren freien, von den Verbindungsknoten 160 und 160a wegweisenden Profilenden mit Profilendstücken 170 und 170a versehen. Die Profilendstücke 170 und 170a sind ebenfalls aus faserverstärktem Kunststoff K gebildet.

Die Hohlprofilbauteile 120, 120a, 130, 130a, 140, 140a und 150 sind bspw. mittels Pultrusion (Faserkunststoffverbund-Pultrusionsprofile), Flechten oder Wickeln hergestellt. Die Hohlprofilbauteile 120, 120a, 130, 130a, 140, 140a und 150 können belastungsabhängig unterschiedlich ausgebildet sein und daher verschiedene Querschnitte und/oder Wanddicken aufweisen und/oder auch aus verschiedenen Faserkunststoffverbundmaterialien gebildet sein. Ferner können die Hohlprofilbauteile 120, 120a, 130, 130a, 140, 140a und 150 über ihren Längserstreckungen mit veränderlichen Querschnitten ausgebildet sein.

Die Rahmenstruktur 100 kann ferner offene Profilbauteile (bspw. U-Profile) und/oder Vollprofilbauteile aufweisen, sowie Profilbauteile, die aus anderen Materialien (bspw. auch Metall) gebildet sind, wobei auch solche Profilbauteile über die Verbindungsknoten 160 bzw. 160a in die Rahmenstruktur 100 eingebunden sein können. Die Rahmenstruktur 100 verfügt trotzt ihres geringen Gewichts über eine hervorragende Festigkeit, Steifigkeit und Crashstabilität.

Die ebenfalls als Längsträger fungierenden Rahmenprofilteile 120 und 120a sind mit manschettenartigen Konsolen 180 und 180a ausgebildet, die bspw. als Motorlager und/oder zur Befestigung von Fahrwerkskomponenten dienen. Die Konsolen 180 und 180a sind ebenso aus einem faserverstärkten Kunststoff K gebildet. Mit 185 ist ein flächiger Verbindungsabschnitt an den Konsolen 180 bzw. 180a bezeichnet, der bspw. der Anbindung oder Abstützung eines Motorlagers oder dergleichen dient.

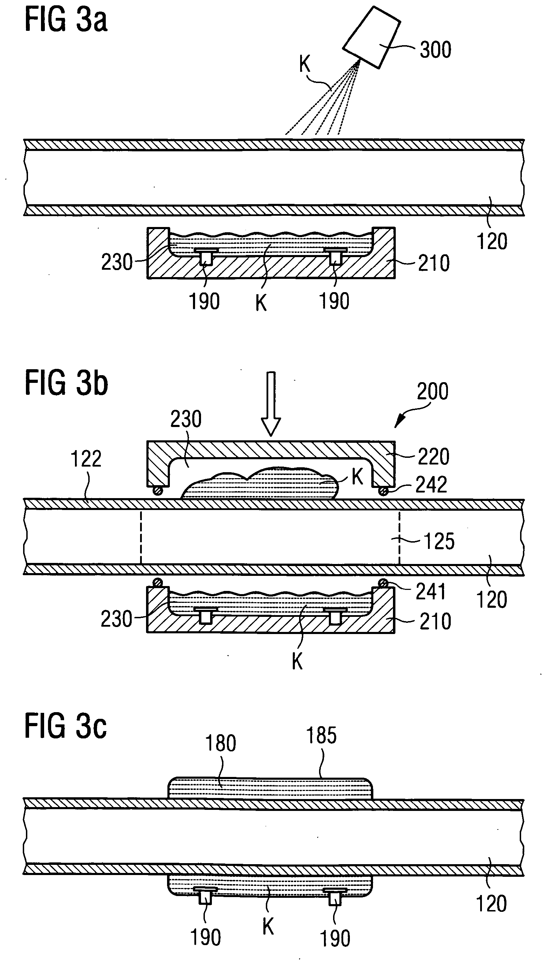

Nachfolgend wird anhand der Fig. 3 die Herstellung bzw. Erzeugung einer solchen Konsole 180 erläutert. Zur Erzeugung der Konsole 180 wird das Hohlprofilbauteil 120 mit seinem betreffenden Abschnitt in ein die Konsole 180 erzeugendes Presswerkzeug 200 eingelegt, wie in Fig. 3a gezeigt. Das mehrteilige Presswerkzeug 200 ist so ausgebildet, dass eine lagegenaue Fixierung des Hohlprofilbauteils 120 ermöglicht wird.

In der Werkzeugkavität 230 des Werkzeugunterteils 210 befindet sich eine bereits vor dem Positionieren des Hohlprofilbauteils 120 eingebrachte kurzfaserhaltige bzw. Kurzfasern enthaltende Kunststoffmasse K, insbesondere mit duroplastischer Matrix (Harz). Nach dem Positionieren des Hohlprofilbauteils 120 wird auf das Hohlprofilbauteil 120 an der betreffenden Stelle weitere kurzfaserhaltige Kunststoffmasse K aufgebracht, bspw. mithilfe der gezeigten Sprühvorrichtung 300 aufgespritzt.

Anschließend wird das Presswerkzeug 200 durch Absenken des Werkzeugoberteils 220 geschlossen, wie in Fig. 3b gezeigt, und ein Pressvorgang ausgeführt. Bei diesem Pressvorgang verteilt sich die definierte Menge der Kurzfasern enthaltenden Kunststoffmasse K in der Kavität 230 und verteilt sich um das Hohlprofilbauteil 120 herum, d. h. das Hohlprofilbauteil 120 wird an der betreffenden Stelle von der kurzfaserhaltigen Kunststoffmasse K umformt, wobei sich gegebenenfalls auch eine stoffschlüssige Verbindung zwischen der kurzfaserhaltigen Kunststoffmasse K und dem Hohlprofilbauteil 120 ausbilden kann. Während des Pressvorgangs wird die Abdichtung der Werkzeugkavität 230 mithilfe von Dichtungen 241 und 242 bewerkstelligt.

Bei der faserhaltigen Kunststoffmasse K kann es sich bspw. um SMC- oder BMC-Masse handeln. Eine alternative Verfahrensvariante sieht vor, dass die faserhaltige Kunststoffmasse K erst während des Pressvorgangs oder kurz davor in die Kavität 230 eingespritzt wird, was auch als Spritzpressen, ähnlich dem RTM-Verfahren, bezeichnet werden kann.

Damit die Hohlprofilwandung 122 des Hohlprofilbauteils 120 während des Pressvorgangs eine ausreichende Stabilität aufweist ist vorgesehen, dass diese eine Wanddicke bzw. Wandstärke von 0,6 mm bis 10 mm, bevorzugt von 2 mm bis 8 mm und insbesondere von 3 mm bis 7 mm besitzt. Ferner kann analog zur Darstellung in Fig. 2 (s. u.) eine innere Abstützung 125 mittels eines in die Profilkammer eingebrachten Schaummaterials oder dergleichen erfolgen. Letzteres ist bspw. auch im Hinblick auf die Crashstabilität vorteilig.

Nachdem die Kunststoffmasse K infolge von Druck- und Temperatureinwirkung (Heißpressen) ausgehärtet ist, kann das Presswerkzeug 200 geöffnet und das Hohlprofilbauteil 120 mit der daran angeformten Konsole 180 entnommen werden, wie in Fig. 3c gezeigt.

Beim Herstellen der Konsole 180 werden zugleich an deren Unterseite metallische Inserts 190 in das Kunststoffmaterial K eingebettet, die später z. B. als Anschraubpunkte für Fahrwerkskomponenten dienen.

Die zur Befestigung oder Abstützung weiterer Bauteile dienende Konsole 180 ist einstückig aus einem faserverstärkten Kunststoffmaterial K gebildet und einteilig mit dem Hohlprofilbauteil 120 ausgebildet. Ein wesentlicher Vorteil der Erfindung ist darin zu sehen, dass die Struktur des Hohlprofilbauteils 120 nicht beeinträchtigt wird. Insbesondere kommt es zu keiner nachteiligen Beschädigung der enthaltenen Verstärkungsfasern (typischerweise Langfasern oder Endlosfasern). Die manschettenartige Konsole 180 kann ferner eine lokale Verstärkung des Hohlprofilbauteils 120 bewirken. Ein weiterer Vorteil ist darin zu sehen, dass die Konsole 180, einschließlich wenigstens eines Verbindungsabschnitts 185, mit Endgeometrie hergestellt werden kann und somit nachbearbeitungsfrei ist.

Die Herstellung eines ebenfalls als Konsole dienenden Profilendstücks 170 erfolgt analog zu der in Fig. 3 gezeigten Vorgehensweise. Allerdings wird zuvor das offene Profilende durch ein pfropf- bzw. stopfenartiges Verschlusselement 135 verschlossen, wie in Fig. 2 gezeigt. Das Verschlusselement 135 ist aus einem Kunststoffschaummaterial, insbesondere einem temperatur- und druckbeständigen Hartschaum, gebildet und bspw. eingeklebt. Der Klebstoff ist mit 136 bezeichnet. Während des Pressvorgangs wirkt das Verschlusselement 135 als Barriere und verhindert das Eindringen der faserhaltigen Kunststoffmasse K ins Innere bzw. in die Profilkammern des Hohlprofilbauteils 130. Die axiale Länge bzw. Verschlusstiefe des Verschlusselements 135 ist bevorzugt so bemessen, dass dieses wenigstens bis in einen durch die Werkzeugdichtungen 241 und 242 gebildeten Werkzeugdichtungsbereich des Presswerkzeugs 200 hineinreicht, so dass das Verschlusselement 135 beim Pressvorgang eine Stabilisierung der Hohlprofilwandung bewirken und die Kavitätsabdichtung verbessern kann.

Die Konsole 180 und/oder das Endstück 170 kann/können vor dem Verbinden des betreffenden Profilbauteils 120 bzw. 130 mit den anderen Profilbauteilen oder erst danach, d. h. nach der Ausbildung des Verbindungsknotens 160, erzeugt werden. Mit der beschriebenen Verfahrensweise kann eine Konsole 180 oder ein Endstück 170 auch nachträglich erzeugt werden.

## Patentansprüche

1. Rahmenstruktur (100) für eine Kraftfahrzeugkarosserie, mit zumindest zwei Profilbauteilen (120, 130, 140, 150) und einem Verbindungsknoten (160), der die Profilbauteile (120, 130, 140, 150) miteinander verbindet, **dadurch gekennzeichnet, dass**
wenigstens eines der Profilbauteile (120, 130) auch wenigstens eine einstückig aus einem mit Kurzfasern faserverstärktem Kunststoff (K) gebildete Konsole (170, 180) aufweist, die an der betreffenden Stelle das Profilbauteil (120, 130) vollständig umgreifend ausgebildet und formschlüssig am Profilbauteil (120, 130) befestigt ist und ein vorsprungartiges Tragelement bildet, an dem andere Anbauteile befestigt oder abgestützt werden können und/oder mit dem die Rahmenstruktur (100) selbst in der Kraftfahrzeugkarosserie befestigt oder abgestützt werden kann.

2. Rahmenstruktur (100) nach Anspruch 1,
**dadurch gekennzeichnet, dass**
die Konsole (180) wenigstens ein integriertes Lasteinleitungselement (190) aufweist.

3. Rahmenstruktur (100) nach einem der vorausgehenden Ansprüche,
**dadurch gekennzeichnet, dass**
die Konsole (180) manschettenartig um das Profilbauteil (120) herum ausgebildet ist.

4. Rahmenstruktur (100) nach einem der vorausgehenden Ansprüche,
**dadurch gekennzeichnet, dass**
die Konsole (170) an einem freien Ende des Profilbauteils (130) angeordnet ist und zugleich ein Profilendstück bildet.

5. Rahmenstruktur (100) nach einem der vorausgehenden Ansprüche,
**dadurch gekennzeichnet, dass**
das Profilbauteil (120, 130) aus einem Faserkunststoffverbundmaterial gebildet ist.

6. Verfahren zur Herstellung einer Konsole (180) an einem Profilbauteil (120) für eine Rahmenstruktur (100) gemäß einem der vorausgehenden Ansprüche, mit den Schritten:
- Positionieren des Profilbauteils (120) in einem die Konsole (180) erzeugenden Presswerkzeug (200);
- Ausführen eines Pressvorgangs unter Zugabe von kurzfaserhaltiger Kunststoffmasse (K) zur Erzeugung der einstückigen Konsole (180), wobei die kurzfaserhaltige Kunststoffmasse (K) vor dem Schließen des Presswerkzeugs (200) in die Werkzeugkavität (230) eingebracht wird und sich beim Pressvorgang in der Kavität (230) verteilt und sich um das Profilbauteil (120, 130) an der betreffenden Stelle herum umformt;
- Öffnen des Presswerkzeugs (100) und Entnahme des Profilbauteils (120) mit der daran angeformten Konsole (180).

7. Verfahren nach Anspruch 6,
**dadurch gekennzeichnet, dass**
es sich bei der faserhaltigen Kunststoffmasse (K) um SMC oder BMC handelt.

8. Verfahren nach Anspruch 6 oder 7,
**dadurch gekennzeichnet, dass**
es sich bei dem Profilbauteil (130) um ein Hohlprofilbauteil handelt und die Konsole (170) an einem freien Ende dieses Hohlprofilbauteils angeformt werden soll, wobei das offene Profilende zunächst durch ein Verschlusselement (135) verschlossen wird, welches dann während des Pressvorgangs ein Eindringen der faserhaltigen Kunststoffmasse (K) in das Hohlprofilbauteil (130) verhindert.

9. Kraftfahrzeugkarosserie mit einer Rahmenstruktur (100), die gemäß einem der Ansprüche 1 bis 5 ausgebildet ist und/oder wenigstens eine unter Anwendung des Verfahrens nach einem der Ansprüche 6 bis 8 hergestellte Konsole (170, 180) aufweist.

## Claims

1. Frame structure (100) for a motor vehicle body, having at least two profile members (120, 130, 140, 150) and a connection node (160) which connects the profile members (120, 130, 140, 150) with one another,
**characterised in that**
at least one of the profile members (120, 130) has at least one console (170, 180) formed integrally from a plastic (K) fibre-reinforced with short fibres, which console is formed completely enclosing the profile member (120, 130) at the position concerned and is formed-fittingly fastened on the profile member (120, 130) and forms a projection-type supporting element at which other add-on parts be fastened or supported and/or with which the frame structure (100) itself can be fastened or supported in the motor vehicle body.

2. Frame structure (100) according to claim 1,
**characterised in that**
the console (180) has at least one integrated load application element (190).

3. Frame structure (100) according to any of the preceding claims,
**characterised in that**
the console (180) is formed in the manner of a sleeve about the profile member (120).

4. Frame structure (100) according to any of the preceding claims,
**characterised in that**
the console (170) is disposed on a free end of the profile member (130) and at the same time forms a profile end piece.

5. Frame structure (100) according to any of the preceding claims,
**characterised in that**
the profile member (120, 130) is formed of a fibre plastic composite material.

6. Method for producing a console (180) on a profile member (120) for a frame structure (100) according to any of the preceding claims, having the steps:
- positioning the profile member (120) in a pressing tool (200) producing the console (180);
- carrying out a pressing procedure with the addition of short-fibre-containing plastic mass (K) for producing the integrated console (180), wherein prior to the closing of the pressing tool (200) the short-fibre-containing plastic mass (K) is introduced into the tool cavity (230) and is distributed during the pressing procedure in the cavity (230) and forms itself around the profile member (120, 130) at the position concerned;
- opening the pressing tool (100) and removing the profile member (120) having the console (180) formed thereon.

7. Method according to claim 6,
**characterised in that**
the fibrous plastic mass (K) is SMC or BMC.

8. Method according to claim 6 or 7,
**characterised in that**
the profile member (130) is a hollow profile member and the console (170) is to be formed on a free end of this hollow profile number, wherein the open profile end is first closed by means of a closing element (135) which then during the pressing procedure prevents a penetration of the fibre-containing plastic mass (K) into the hollow profile member (130).

9. Motor vehicle body having a frame structure (100) which is formed according to any of claims 1 to 5 and/or has at least one console (170, 180) produced by using the method according to any of claims 6 to 8.

## Revendications

1. Structure de cadre (100) pour une carrosserie de véhicule, avec au moins deux composants profilés (120, 130, 140, 150) et un noeud de liaison (160), qui relie l'un à l'autre les composants profilés (120, 130, 140, 150), **caractérisée en ce que**
au moins un des composants profilés (120, 130) présente aussi au moins une console (170, 180) formée d'un seul tenant en un plastique renforcé par fibres avec des fibres courtes (K), qui est réalisée à l'endroit concerné en entourant complètement le composant profilé (120, 130) et est fixée par correspondance de forme au composant profilé (120, 130) et forme un élément de support en saillie, au niveau duquel d'autres parties de montage peuvent être fixées ou soutenues et/ou avec lequel la structure de cadre (100) proprement dite peut être fixée ou soutenue dans la carrosserie de véhicule.

2. Structure de cadre (100) selon la revendication 1,
**caractérisée en ce que**
la console (180) présente au moins un élément d'introduction de charge intégré (190).

3. Structure de cadre (100) selon l'une quelconque des revendications précédentes,
**caractérisée en ce que**
la console (180) est réalisée en forme de manchette autour du composant profilé (120).

4. Structure de cadre (100) selon l'une quelconque des revendications précédentes,
**caractérisée en ce que**
la console (170) est agencée à une extrémité libre du composant profilé (130) et forme en même temps un embout profilé.

5. Structure de cadre (100) selon l'une quelconque des revendications précédentes,
**caractérisée en ce que**
le composant profilé (120, 130) est formé en un matériau composite de matière plastique renforcé par fibres.

6. Procédé de fabrication d'une console (180) sur un composant profilé (120) pour une structure de cadre (100) selon l'une quelconque des revendications précédentes, avec les étapes de :
- positionnement du composant profilé (120) dans un outil de presse (200) générant la console (180) ;
- réalisation d'une opération de pressage avec ajout de masse de matière plastique contenant des fibres courtes (K) pour la génération d'une console (180) d'un seul tenant, dans lequel la masse de matière plastique contenant des fibres courtes (K) est introduite avant la fermeture de l'outil de presse (200) dans la cavité d'outil (230) et se répartit lors de l'opération de pressage dans la cavité (230) et se moule autour du composant profilé (120, 130) à l'endroit concerné ;
- ouverture de l'outil de presse (100) et retrait du composant profilé (120) avec la console (180) qui y est moulée.

7. Procédé selon la revendication 6,
**caractérisé en ce que**
la masse de matière plastique contenant des fibres (K) est SMC ou BMC.

8. Procédé selon la revendication 6 ou 7,
**caractérisé en ce que**
le composant profilé (130) est un composant profilé creux et la console (170) doit être moulée à une extrémité libre de ce composant profilé creux, dans lequel l'extrémité profilée ouverte est d'abord fermée par un élément de fermeture (135), lequel empêche alors pendant l'opération de pressage une pénétration de la masse de matière plastique contenant des fibres (K) dans le composant profilé creux (130).

9. Carrosserie de véhicule avec une structure de cadre (100), qui est réalisée selon l'une quelconque des revendications 1 à 5 et/ou au moins une console (170, 180) fabriquée en application du procédé selon l'une quelconque des revendications 6 à 8.
